(19) **Europäisches Patentamt**
**European Patent Office**
**Office européen des brevets**

(11) **EP 2 928 715 B1**

(12) **FASCICULE DE BREVET EUROPEEN**

(45) Date de publication et mention
de la délivrance du brevet:
**22.02.2017 Bulletin 2017/08**

(21) Numéro de dépôt: **13808159.1**

(22) Date de dépôt: **03.12.2013**

(51) Int Cl.:
*B60K 6/48* *(2007.10)*     *B60K 6/52* *(2007.10)*
*B60W 10/02* *(2006.01)*   *B60W 10/11* *(2012.01)*
*B60W 10/06* *(2006.01)*   *B60W 10/08* *(2006.01)*
*B60W 30/19* *(2012.01)*

(86) Numéro de dépôt international:
**PCT/FR2013/052932**

(87) Numéro de publication internationale:
**WO 2014/087096 (12.06.2014 Gazette 2014/24)**

(54) **PROCEDE DE CONTROLE DE COUPLES LORS DU CHANGEMENT DE RAPPORT D'UNE BOITE DE VITESSES D'UN VEHICULE HYBRIDE**

VERFAHREN ZUR STEUERUNG VON DREHMOMENTEN BEIM WECHSELN VON GÄNGEN BEI EINEM SCHALTGETRIEBE EINES HYBRIDFAHRZEUGS

METHOD FOR CONTROLLING TORQUES WHEN CHANGING GEAR IN A GEARBOX OF A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2012 FR 1261740**

(43) Date de publication de la demande:
**14.10.2015 Bulletin 2015/42**

(73) Titulaire: **Peugeot Citroën Automobiles SA
78140 Vélizy Villacoublay (FR)**

(72) Inventeurs:
• **LE NEINDRE, Yvan**
  **F-75017 Paris (FR)**
• **ROCQ, Gaetan**
  **F-78125 La Boissiere Ecole (FR)**

(56) Documents cités:
**FR-A1- 2 935 660    US-A1- 2002 055 411
US-B1- 6 319 168**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de contrôle de couples lors d'un changement de rapport de boîte de vitesses, pour un véhicule hybride comportant un moteur thermique entraînant par un embrayage et une boîte de vitesses un premier train roulant, et une machine électrique de traction entraînant l'autre train roulant (voir par exemple FR-A-2935660), l'invention concerne aussi un calculateur de contrôle et un véhicule hybride mettant en oeuvre un tel procédé.

Certains véhicules hybrides, appelés hybrides parallèles, disposent d'un moteur thermique entraînant par un embrayage un arbre primaire d'une boîte de vitesses comportant une machine électrique de traction qui est liée à cet arbre.

Un procédé connu de contrôle de l'embrayage de ce type de véhicule, présenté notamment par le document FR-A1-2887495, réalise lors de l'ouverture de l'embrayage pour effectuer un changement de rapport, afin d'éviter un choc sur l'arbre primaire, une variation brutale du couple délivré sur cet arbre par les motorisations, en fonction de la variation des inerties liées à cet arbre, dépendant de l'état de l'embrayage.

Toutefois pour des véhicules hybrides comportant un moteur thermique qui motorise un premier train roulant par une boîte de vitesses comportant un embrayage en entrée, et une machine électrique de traction qui motorise l'autre train, par exemple si le moteur thermique entraîne le train avant du véhicule et la machine électrique le train arrière, il est nécessaire de prévoir des adaptations de ce procédé prenant en compte l'inertie de la machine électrique qui se trouve à l'extérieur de la transmission.

La présente invention a notamment pour but d'éviter pour ce type de véhicule hybride lors d'un changement de rapport, des chocs pendant l'ouverture de l'embrayage.

Elle propose à cet effet un procédé de contrôle de couples pour un véhicule hybride, pendant un changement de rapport d'une boîte de vitesses reliant un moteur thermique à des roues motrices d'un premier train roulant, au cours d'un roulage utilisant ce moteur, ce véhicule comportant une machine électrique qui entraîne les roues du deuxième train roulant, caractérisé en ce que pour l'ouverture de l'embrayage préparant le changement de rapport, il réalise une diminution du contrôle en couple du moteur thermique qui vise un petit niveau de couple cible calculé, et une diminution correspondante de la consigne de couple de l'embrayage qui vise aussi ce couple cible, puis au moment où le couple cible est atteint par le contrôle du moteur, il applique une chute brutale de la consigne de couple de ce moteur, ainsi qu'une consigne d'ouverture instantanée de l'embrayage, le couple cible étant calculé pour que la chute forme un écart de couple qui compense la variation d'inertie de la chaîne de traction due à l'ouverture complète de l'embrayage, ce calcul prenant en compte l'inertie de la machine électrique et du véhicule ramenées à l'arbre primaire, ainsi que le couple de cette machine et le couple résistant du véhicule.

Un avantage du procédé de contrôle de couples selon l'invention, est que pour les changements de rapport de la boîte de vitesses on peut calculer de manière précise lors de l'ouverture de l'embrayage, avec la chute brutale de couple sur l'arbre primaire, la compensation de l'écart de couple dynamique donné par l'inertie du moteur thermique multiplié par son accélération, et ainsi éviter un choc dû à des discontinuités entraînant des oscillations de l'accélération du véhicule.

Le procédé de contrôle de couples selon l'invention peut en outre comporter une ou plusieurs des caractéristiques suivantes, qui peuvent être combinées entre elles.

En particulier, le procédé de contrôle peut calculer le niveau de couple cible, correspondant à l'écart de consigne avant l'ouverture Cap2 et après l'ouverture complète Cap1, avec la formule suivante :

$$C_{ap2} - C_{ap1} = \frac{\frac{I_{mth}}{\eta^2}}{J_{veh} + \frac{I_{mel}}{\rho^2}} * \left( C_{ap1} + \frac{\eta * C_{mel}}{\rho} - \eta\, C_{res} \right) ;$$

la valeur « η*Cmel/ρ » représentant l'inertie de la machine électrique arrière, pouvant être négligée dans ce calcul en fonction de son dimensionnement par rapport aux autres inerties.

Avantageusement, pendant la diminution de la consigne de couple de l'embrayage, le procédé maintient cette consigne un peu supérieure à celle du couple moteur pour conserver la synchronisation de l'embrayage.

L'invention a aussi pour objet un calculateur de contrôle pour une chaîne de traction de véhicule hybride, comprenant un embrayage qui relie un moteur thermique à l'arbre primaire d'une boîte de vitesses entraînant des roues d'un premier train roulant, ce véhicule disposant d'une machine électrique qui entraîne les roues du deuxième train roulant, le calculateur comportant des moyens mettant en oeuvre un procédé de contrôle de couples pour un changement de rapport de la boîte de vitesses, comprenant l'une quelconque des caractéristiques précédentes.

L'invention a de plus pour objet un véhicule hybride comportant une chaîne de traction, comprenant un embrayage qui relie un moteur thermique à l'arbre primaire d'une boîte de vitesses entraînant les roues avant, ce véhicule disposant d'une machine électrique qui entraîne les roues arrière, le véhicule comportant des moyens mettant en oeuvre un procédé de contrôle de couples pour un changement de rapport de la boîte de vitesses, comprenant l'une quelconque des caractéristiques précédentes.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :

- la figure 1 est un schéma d'un véhicule hybride mettant en oeuvre un procédé de contrôle de couple selon l'invention ;
- la figure 2 est un schéma simplifié des chaînes de traction de ce véhicule ;
- la figure 3 est un graphique présentant en fonction du temps pour ce procédé, différentes courbes de couple lors d'un changement de rapport ; et
- la figure 4 est un graphique présentant pour ce changement de rapport, différentes courbes de vitesse.

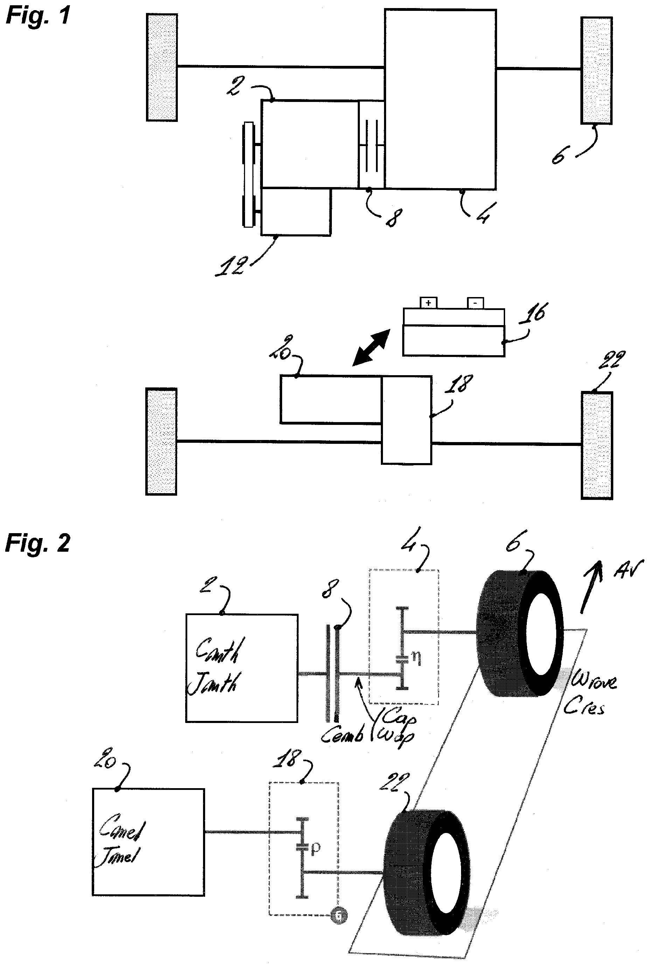

La figure 1 présente un véhicule hybride comportant un moteur thermique 2 lié par un embrayage 8 à l'arbre primaire d'une boîte de vitesses 4 comprenant une commande automatique de l'embrayage et des passages de vitesses, qui entraîne les roues avant 6 de ce véhicule.

Une machine électrique avant 12 est couplée en permanence au moteur thermique 2, afin de l'assister dans son fonctionnement.

Une machine électrique arrière 20 alimentée par une batterie 16, est couplée aux roues arrière 22 du véhicule par une transmission 18.

Un système de supervision de la chaîne de traction coordonne le fonctionnement des deux motorisations 2, 20, de la boîte de vitesses 4 en choisissant son rapport, et de l'embrayage 8, pour décider du mode de roulage répartissant la puissance à obtenir en fonction des demandes du conducteur, afin d'obtenir une optimisation des points de fonctionnement qui permet de réduire la consommation d'énergie, les émissions de gaz polluants et l'agrément de conduite.

Le véhicule hybride peut ainsi fonctionner avec des modes de roulage comprenant notamment un mode électrique utilisant la machine électrique arrière 20, le moteur thermique 2 étant arrêté et la boîte de vitesses 4 étant au point mort, un mode hybride utilisant les deux motorisations, un mode quatre roues motrices avec les deux motorisations, appelé aussi mode « E-AWD », permettant d'améliorer la motricité et la tenue de route du véhicule, ainsi qu'un mode sport.

La figure 2 présente de manière simplifiée, certaines grandeurs physiques nécessaires pour le fonctionnement du procédé de contrôle de couple lors de l'ouverture de l'embrayage 8 pour réaliser un changement de rapport, afin d'éviter des chocs et de maintenir une continuité de l'accélération du véhicule pour assurer le confort des passagers. La flèche marquée « AV » indique le sens de marche du véhicule vers l'avant.

Le procédé de contrôle de couples utilise les valeurs suivantes :

- aveh : Accélération véhicule (m/s$^2$)
- Cemb : Couple embrayage (N.m)
- Cmel : Couple machine électrique (N.m)
- Cmth : Couple moteur thermique (N.m)
- Cres : Couple résistif à la roue (N.m)
- Cap : Couple arbre primaire (N.m)
- Jmel : Inertie machine électrique (kg.m$^2$)
- Jmth : Inertie moteur thermique (kg.m$^2$)
- Jveh : Inertie véhicule (kg.m$^2$)
- η : Démultiplication de la boîte de vitesses
- ρ : Démultiplication de la transmission de la machine électrique
- wap: Régime arbre primaire (rad/s)
- ωroue : Régime roue (rad/s)

Considérons le bilan des couples avant et après l'ouverture complète de l'embrayage. Avant l'ouverture de l'embrayage qui est synchronisé, l'inertie du moteur thermique s'ajoute sur l'arbre primaire, on a :

$$a_{veh} = R \frac{d\omega_{roue}}{dt} = R \frac{\frac{C_{mel}}{\rho} + \frac{C_{mth}}{\eta} - C_{res}}{J_{veh} + \frac{J_{mel}}{\rho^2} + \frac{J_{mth}}{\eta^2}}$$

Après l'ouverture complète de l'embrayage, on a :

$$a_{veh} = R \frac{d\omega_{roue}}{dt} = R \frac{\frac{C_{mel}}{\rho} + \frac{C_{emb}}{\eta} - C_{res}}{J_{veh} + \frac{J_{mel}}{\rho^2}}$$

L'objectif du procédé de contrôle du couple est de garantir à l'ouverture complète de l'embrayage une continuité de l'accélération du véhicule aveh, et donc des deux égalités précédentes.

$$\frac{\frac{C_{mel}}{\rho} + \frac{C_{mth}}{\eta} - C_{res}}{J_{veh} + \frac{J_{mel}}{\rho^2} + \frac{J_{mth}}{\eta^2}} = \frac{\frac{C_{mel}}{\rho} + \frac{C_{emb}}{\eta} - C_{res}}{J_{veh} + \frac{J_{mel}}{\rho^2}}$$

On en déduit en prenant Cap2 et Cap1 les consignes de couple sur l'arbre primaire de la boîte de vitesses 4, respectivement juste avant et juste après l'ouverture de l'embrayage :

$$\frac{C_{mth}}{\eta} = \frac{C_{ap2}}{\eta} = \left(J_{veh} + \frac{J_{mel}}{\rho^2} + \frac{J_{mth}}{\eta^2}\right)\frac{\frac{C_{mel}}{\rho} + \frac{C_{emb}}{\eta} - C_{res}}{J_{veh} + \frac{J_{mel}}{\rho^2}} + C_{res} - \frac{C_{mel}}{\rho}$$

$$= \frac{\left(J_{veh} + \frac{J_{mel}}{\rho^2} + \frac{J_{mth}}{\eta^2}\right)}{J_{veh} + \frac{J_{mel}}{\rho^2}} * \frac{C_{ap1}}{\eta} + \frac{\frac{J_{mth}}{\eta^2}}{J_{veh} + \frac{J_{mel}}{\rho^2}} * \left(\frac{C_{mel}}{\rho} - C_{res}\right)$$

On déduit de cette dernière égalité ΔCap_cns correspondant à l'écart entre la consigne initiale Cap2 et la consigne finale Cap1, pendant l'ouverture formant une discontinuité, avec la formule:

$$C_{ap2} - C_{ap1} = \frac{\frac{J_{mth}}{\eta^2}}{J_{veh} + \frac{J_{mel}}{\rho^2}} * \left(C_{ap1} + \frac{\eta * C_{mel}}{\rho} - \eta\, C_{res}\right) \tag{1}$$

On voit donc qu'il est nécessaire non seulement de tenir compte du retrait de l'inertie moteur Jmth pour établir une absence de choc lors de l'accostage, mais également d'additionner le couple appliqué par la machine arrière aux efforts résistifs appliqués aux roues, afin de garantir une continuité d'accélération du véhicule dans cette phase.

On notera que dans le cadre d'une industrialisation du logiciel intégrant le procédé de contrôle, et dans le but d'optimiser la charge et l'espace mémoire du calculateur mettant en oeuvre ce procédé, on pourra simplifier le calcul en négligeant le terme concernant l'inertie de la machine électrique arrière 20 en fonction de son dimensionnement.

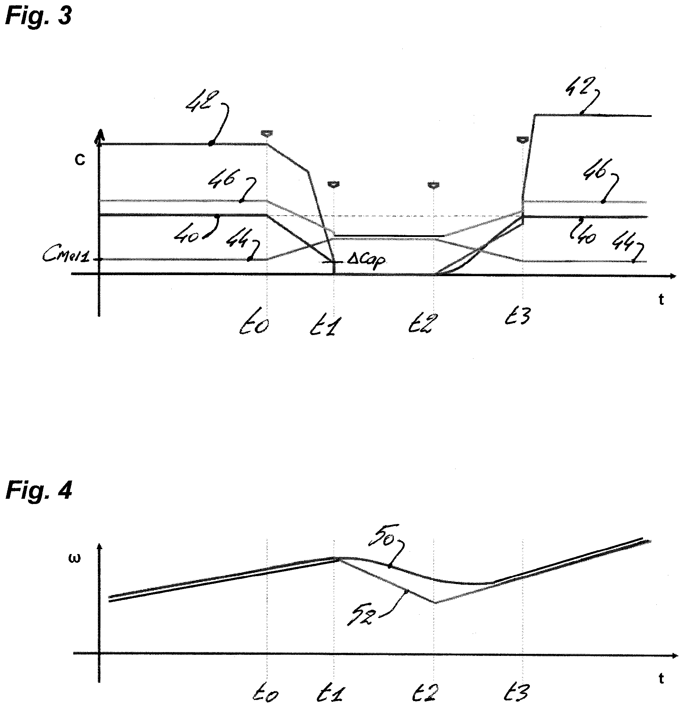

Les figures 3 et 4 présentent en fonction du temps t, un exemple de changement de rapport de la boîte de vitesses pour passer à un rapport supérieur comportant une démultiplication plus faible.

Le temps t0 correspond au début du changement de rapport de vitesse, avec une baisse de la consigne de couple du moteur thermique 40 établie par le procédé, permettant en parallèle une diminution de la consigne de couple de l'embrayage 42 établie aussi par le procédé, qui reste synchronisé, pour arriver au temps t1. L'ouverture de l'embrayage est réalisée de manière brutale au temps t1.

La courbe de consigne de couple du moteur thermique 40, suit un profil déterminé par des contraintes d'agrément. On peut utiliser en particulier une pente constante, un profil du premier ordre ou du deuxième ordre.

La consigne de couple du moteur thermique 40 comprend une rampe de diminution visant un niveau de couple cible calculé ΔCap, représentant un petit écart de consigne avec le niveau de couple nul, à partir duquel le procédé applique une chute brutale de cette consigne de couple.

La courbe 42 représente la consigne de couple embrayage Cemb réalisée en boucle ouverte, qui diminue en parallèle avec la baisse de consigne de couple 40 du moteur thermique Cmth, tout en restant un peu supérieure pour éviter un glissement et maintenir sa synchronisation.

La consigne de couple embrayage 42 vise au temps t1 comme pour la consigne du moteur 40, le niveau de couple cible ΔCap, pour effectuer ensuite à ce temps une ouverture brutale qui fait chuter son couple à zéro. L'ouverture de l'embrayage est rapide dans la mesure où sa consigne de couple est au plus près du minimum ΔCap, tout en gardant la synchronisation.

Le couple cible ΔCap correspondant à l'écart de consigne avant l'ouverture Cap2 et après l'ouverture complète Cap1, qui est nulle dans ce cas, est calculé pour former un petit écart de couple compensant la variation d'inertie sur la chaîne de traction, due à l'ouverture complète de l'embrayage qui retire l'inertie du moteur thermique.

On notera que le maintien de la synchronisation de l'embrayage pendant toute la baisse de sa consigne de couple 42, permet de réduire les incertitudes de pilotage du moteur thermique liées à l'estimation du couple transmissible par cet embrayage lorsqu'il glisse, ce qui facilite la commande.

La courbe 44 représente la consigne de couple de la machine électrique Cmel, ramenée au niveau de l'arbre primaire, qui se trouve au départ avant le temps t0 à une valeur constante Cmel1.

A partir de ce temps t0 où le couple délivré par le moteur thermique diminue, la consigne de couple de la machine électrique 44 commence à monter suivant une rampe constante, pour atteindre au temps t1 sa valeur de couple maximal qui est maintenue pendant toute la durée d'ouverture de l'embrayage jusqu'au temps t2, de manière à compenser au moins en partie la disparition du couple du moteur thermique 40.

La courbe 46 représente le couple résultant sur les roues motrices, ramené à travers successivement la démultiplication η de la transmission arrière 18 et celle ρ de la boîte de vitesses avant 4, à l'arbre primaire de la boîte de vitesses de manière à garder des valeurs équivalentes. Pendant le temps d'ouverture de l'embrayage, on a seulement le couple délivré par la machine électrique 44.

Entre les temps t1 et t2 l'embrayage étant ouvert, la boîte de vitesses peut accomplir de manière automatique son changement de rapport comprenant une phase de synchronisation de la vitesse de l'arbre primaire, puis une phase d'engagement du pignon correspondant au nouveau rapport.

Le temps t2 correspond au début de la reprise de couple par l'embrayage, après le changement de rapport. L'embrayage réalise ensuite un glissement permettant la reprise progressive de couple jusqu'au temps t3, où il se ferme complètement avec un arrêt de ce glissement.

On atteint après le temps t3 correspondant à la fin du changement de rapport, les valeurs de couple optimal du moteur thermique Cmth et de la machine électrique Cmel.

Pour la fermeture de l'embrayage comportant un glissement compris entre les temps t2 et t3, on a les évolutions suivantes.

La courbe 42 de consigne de couple sur l'embrayage comporte une rampe de reprise de couple, dont la pente constante est calculée pour la durée comprise entre le temps t2, et le temps t3 où le moteur thermique prend son couple optimal. Au temps t3 on a une augmentation brutale de la consigne de couple de l'embrayage 42, qui permet de coller très rapidement cet embrayage en arrêtant son glissement.

Le moteur thermique comporte une vitesse de rotation 50 présentée figure 4, un peu supérieure à celle de l'arbre primaire de la boîte de vitesses 52, pendant toute la phase d'ouverture de l'embrayage à partir du temps t1, puis de glissement de cet embrayage à partir du temps t2.

Pendant le glissement de l'embrayage entre les temps t2 et t3, le moteur thermique est piloté en vitesse suivant une consigne assurant un accostage tangentiel à la vitesse de l'arbre primaire 52, de manière à respecter la continuité du couple de ce moteur Cmth, lors du passage d'une régulation par la vitesse à une régulation par le couple.

Au temps t3 lors de la fermeture complète de l'embrayage, l'écart de couple de consigne ΔCap_cns calculé par le procédé avec la formule (1) présentée ci-dessus, prend en compte l'inertie supplémentaire ajoutée sur cet arbre par le moteur thermique, pour permettre de conserver une accélération constante de l'arbre primaire, et donc du véhicule. On notera qu'il est nécessaire de générer cet échelon de manière instantanée, sous peine de provoquer des à-coups.

On peut réaliser ainsi de manière économique avec seulement des compléments de logiciels, en utilisant les équipements existants dans le véhicule hybride, une amélioration du confort en supprimant les à-coups lors des phases de changement de rapport.

Avantageusement, le procédé est mis en oeuvre de manière économique par un calculateur existant, qui peut en particulier être le calculateur de contrôle du moteur thermique.

## Revendications

1. - Procédé de contrôle de couples pour un véhicule hybride, pendant un changement de rapport d'une boîte de vitesses (4) reliant un moteur thermique (2) à des roues motrices (6) d'un premier train roulant, au cours d'un roulage utilisant ce moteur, ce véhicule comportant une machine électrique (20) qui entraîne les roues du deuxième train roulant (22), **caractérisé en ce que** pour l'ouverture de l'embrayage (8) au début du changement de rapport, il réalise une diminution du contrôle en couple (40) du moteur thermique (2) qui vise un petit niveau de couple cible calculé (ΔCap), et une diminution correspondante de la consigne de couple de l'embrayage (42) qui vise aussi ce couple cible, puis au moment (t1) où le couple cible est atteint par le contrôle du moteur, il applique une chute brutale de la consigne de couple de ce moteur, ainsi qu'une consigne d'ouverture instantanée de l'embrayage (8), le couple cible (ΔCap) étant calculé pour que la chute forme un écart de couple qui compense la variation d'inertie de la chaîne de traction due à l'ouverture complète de l'embrayage, ce calcul prenant en compte l'inertie de la machine électrique (20) et du véhicule ramenées à l'arbre primaire, ainsi que le couple de cette machine et le couple résistant du véhicule.

**2.** - Procédé de contrôle de couples selon la revendication 1, **caractérisé en ce qu'**il calcule le niveau de couple cible (ΔCap), correspondant à l'écart de consigne avant l'ouverture Cap2 et après l'ouverture complète Cap1, avec la formule suivante :

$$C_{ap2} - C_{ap1} = \frac{\frac{J_{mth}}{\eta^2}}{J_{veh} + \frac{J_{mel}}{\rho^2}} * \left( C_{ap1} + \frac{\eta * C_{mel}}{\rho} - \eta\, C_{res} \right);$$

en prenant les valeurs suivantes :

- Cmel : Couple machine électrique (20)
- Cmth : Couple moteur thermique (2)
- Cres : Couple résistif à la roue
- Jmel : Inertie machine électrique
- Jmth : Inertie moteur thermique
- Jveh : Inertie véhicule
- η : Démultiplication de la boîte de vitesses (4)
- ρ : Démultiplication de la transmission aux roues (18) de la machine électrique ;

la valeur « η*Cmel/ρ » représentant l'inertie de la machine électrique arrière (20), pouvant être négligée dans ce calcul en fonction de son dimensionnement par rapport aux autres inerties.

**3.** - Procédé de contrôle de couples selon la revendication 1 ou 2, **caractérisé en ce que** pendant la diminution de la consigne de couple de l'embrayage (42), il maintient cette consigne un peu supérieure à celle du couple moteur (40) pour conserver la synchronisation de l'embrayage.

**4.** - Calculateur de contrôle pour une chaîne de traction de véhicule hybride, comprenant un embrayage (8) qui relie un moteur thermique (2) à l'arbre primaire d'une boîte de vitesses (4) entraînant des roues d'un premier train roulant (6), ce véhicule disposant d'une machine électrique (20) qui entraîne les roues du deuxième train roulant (22), **caractérisé en ce qu'**il comporte des moyens mettant en oeuvre un procédé de contrôle de couples pour un changement de rapport de la boîte de vitesses (4), qui est réalisé selon l'une quelconque des revendications précédentes.

**5.** - Véhicule hybride comportant une chaîne de traction, comprenant un embrayage (8) qui relie un moteur thermique (2) à l'arbre primaire d'une boîte de vitesses (4) entraînant les roues avant (6), ce véhicule disposant d'une machine électrique (20) qui entraîne les roues arrière (22), **caractérisé en ce qu'**il comporte des moyens mettant en oeuvre un procédé de contrôle de couples pour un changement de rapport de la boîte de vitesses (4), qui est réalisé selon l'une quelconque des revendications 1 à 3.

**Patentansprüche**

**1.** Verfahren zur Steuerung von Drehmomenten für ein Hybridfahrzeug während eines Gangwechsels eines Schaltgetriebes (4), das einen Verbrennungsmotor (2) mit Antriebsrädern (6) einer ersten Fahrachse im Laufe eines Fahrens, das diesen Motor verwendet, verbindet, wobei dieses Fahrzeug eine Elektromaschine (20) umfasst, die die Räder der zweiten Fahrachse (22) antreibt, **dadurch gekennzeichnet, dass** es zum Öffnen der Kupplung (8) zu Beginn des Gangwechsels eine Verringerung der Drehmomentsteuerung (40) des Verbrennungsmotors (2) ausführt, die auf ein berechnetes niedriges Zieldrehmomentniveau (ΔCap) abzielt, und eine entsprechende Verringerung des Solldrehmoments der Kupplung (42), die ebenfalls auf dieses Zieldrehmoment abzielt, und dann im Augenblick (t1), in dem das Zieldrehmoment durch die Steuerung des Motors erreicht ist, ein plötzliches Abfallen des Drehmomentsollwerts dieses Motors sowie einen Momentanöffnungssollwert der Kupplung (8) anwendet, wobei das Zieldrehmoment (ΔCap) berechnet ist, damit das Abfallen einen Drehmomentunterschied bildet, der die Trägheitsvariation des Antriebsstrangs aufgrund des vollständigen Öffnens der Kupplung kompensiert, wobei diese Berechnung die Trägheit der Elektromaschine (20) und des Fahrzeugs bezogen auf die Hauptwelle sowie das Drehmoment dieser Maschine und das Gegenmoment des Fahrzeugs berücksichtigt.

2. Verfahren zur Steuerung von Drehmomenten nach Anspruch 1, **dadurch gekennzeichnet, dass** es das Zieldrehmomentniveau (ΔCap) berechnet, das dem Sollwertunterschied vor dem Öffnen Cap2 und nach dem vollständigen Öffnen Cap1 entspricht, mit der folgenden Formel:

$$C_{ap2} - C_{ap1} = \frac{\frac{J_{mth}}{\eta^2}}{J_{veh} + \frac{J_{mel}}{\rho^2}} * \left( C_{ap1} + \frac{\eta * C_{mel}}{\rho} - \eta \, C_{res} \right)$$

wobei die folgenden Werte genommen werden:

- Cmel: Drehmoment der Elektromaschine (20)
- Cmth: Drehmoment des Verbrennungsmotors (2)
- Cres: Gegenmoment an dem Rad
- Jmel: Trägheit der Elektromaschine
- Jmth: Trägheit des Verbrennungsmotors
- Jveh: Trägheit des Fahrzeugs
- η: Untersetzung des Schaltgetriebes (4)
- ρ: Untersetzung des Getriebes an den Rädern (18) der Elektromaschine,

wobei der Wert "η*Cmel/ρ" die Trägheit der hinteren Elektromaschine (20) darstellt, die bei dieser Berechnung in Abhängigkeit von ihrer Bemessung in Bezug zu den anderen Trägheiten vernachlässigt werden kann.

3. Verfahren zur Steuerung von Drehmomenten nach Anspruch 1 oder 2, **dadurch gekennzeichnet, dass** es während der Verringerung des Drehmomentsollwerts der Kupplung (42) diesen Sollwert etwas höher als den des Motordrehmoments (40) hält, um die Synchronisation der Kupplung zu wahren.

4. Rechner zur Steuerung eines Antriebsstrangs eines Hybridfahrzeugs, das eine Kupplung (8) umfasst, die einen Verbrennungsmotor (2) mit der Hauptwelle eines Schaltgetriebes (4), das Räder einer ersten Fahrachse (6) antreibt, verbindet, wobei dieses Fahrzeug über eine Elektromaschine (20) verfügt, die die Räder der zweiten Fahrachse (22) antreibt, **dadurch gekennzeichnet, dass** er Mittel umfasst, um ein Verfahren zur Steuerung von Drehmomenten für einen Gangwechsel des Schaltgetriebes (4) umfasst, das gemäß einem der vorhergehenden Ansprüche ausgeführt wird.

5. Hybridfahrzeug, das einen Antriebsstrang umfasst, der eine Kupplung (8) umfasst, die einen Verbrennungsmotor (2) mit der Hauptachse eines Schaltgetriebes (4), das die vorderen Räder (6) antreibt, verbindet, wobei dieses Fahrzeug über eine Elektromaschine (20) verfügt, die die Heckräder (22) antreibt, **dadurch gekennzeichnet, dass** es Mittel umfasst, die ein Verfahren zur Steuerung von Drehmomenten für einen Gangwechsel des Schaltgetriebes (4) umsetzen, das nach einem der Ansprüche 1 bis 3 ausgeführt ist.

## Claims

1. A method for controlling torques for a hybrid vehicle, during a change in gear of a gearbox (4) connecting a combustion engine (2) to drive wheels (6) of a first wheelset, during running using this engine, this vehicle comprising an electric machine (20) which drives the wheels of the second wheelset (22), **characterized in that** for the opening of the clutch (8) at the start of the gear change, it realizes a decrease of the control by torque (40) of the combustion engine (2) which targets a low calculated target torque level (ΔCap), and a corresponding reduction of the torque setpoint for the clutch (42), which also targets this target torque, then at the instant (t1) at which the target torque is reached by the control of the engine, it applies an abrupt drop in the torque setpoint of this engine, and also an instantaneous opening setpoint of the clutch (8), the target torque (ΔCap) being calculated so that the drop forms a torque offset which compensates for the variation in inertia of the powertrain due to the complete opening of the clutch, this calculation taking into account the inertia of the electric machine (20) and of the vehicle applied to the primary shaft, and also the torque of this machine and the resistant torque of the vehicle.

2. The method for controlling torques according to Claim 1, **characterized in that** it calculates the target torque level ($\Delta$Cap), corresponding to the torque offset before opening Cap2 and after the complete opening Cap1, with the following formula:

$$C_{ap2} - C_{ap1} = \frac{\frac{J_{mth}}{\eta^2}}{J_{veh} + \frac{J_{mel}}{\rho^2}} * \left( C_{ap1} + \frac{\eta * C_{mel}}{\rho} - \eta\, C_{res} \right) \; ;$$

taking the following values:

- Cmel: electric machine torque (20)
- Cmth: combustion engine torque (2)
- Cres: resistive torque at the wheel
- Jmel: electric machine inertia
- Jmth: combustion engine inertia
- Jveh: vehicle inertia
- $\eta$: reduction ratio of the gearbox (4)
- $\rho$ : reduction ratio of the transmission to the wheels (18) of the electric machine;

the value "$\eta$*Cmel/$\rho$" representing the inertia of the rear electric machine (20), being able to be disregarded in this calculation as a function of its dimensioning with respect to the other inertias.

3. The method for controlling torques according to Claim 1 or 2, **characterized in that** during the reduction of the torque setpoint for the clutch (42), it keeps this setpoint slightly greater than that of the engine torque (40) to preserve the synchronisation of the clutch.

4. A control computer for a powertrain of a hybrid vehicle, including a clutch (8) which connects a combustion engine (2) to the primary shaft of a gearbox (4) driving wheels of a first wheelset (6), this vehicle having an electric machine (20) which drives the wheels of the second wheelset (22), **characterized in that** it comprises means implementing a method for controlling torques for a gear change of the gearbox (4), which is realized according to any one of the preceding claims.

5. A hybrid vehicle comprising a powertrain, including a clutch (8) which connects a combustion engine (2) to the primary shaft of a gearbox (4) driving the front wheels (6), this vehicle having an electric machine (20) which drives the rear wheels (22), **characterized in that** it comprises means implementing a method for controlling torques for a gear change of the gearbox (4), which is realized according to any one of Claims 1 to 3.

**Fig. 1**

**Fig. 2**

*Fig. 3*

*Fig. 4*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2935660 A
- FR 2887495 A1